# FASCICULE DE BREVET EUROPEEN

(11) **EP 2 038 235 B1**
(45) Date de publication et mention de la délivrance du brevet: **21.04.2010**
(21) Numéro de dépôt: 07786984.0
(22) Date de dépôt: 02.07.2007
(51) Int. Cl.: C04B 28/14, C04B 40/00

(54) **ENDUIT EN POUDRE A INDICATION DE SECHAGE.**
PULVERLACK MIT TROCKNUNGSINDIKATOR
POWDER COATING WITH A DRYING INDICATOR

(30) Priorité: 04.07.2006 FR 0652791
(43) Date de publication de la demande: 25.03.2009
(73) Titulaire: Beissier, 77760 La Chapelle La Reine (FR)
(72) Inventeur: PFLANZ, Frédéric, 91400 Orsay (FR)
(74) Mandataire: Ilgart, Jean-Christophe
(86) Numéro de dépôt international: PCT/EP2007/056634
(87) Numéro de publication internationale: WO 2008/003672

(56) Documents cités:
- EP-A1- 0 884 291
- WO-A-00/66508
- KRAVCHENKO ET AL.: "Composition for floor coatings" CHEMICAL ABSTRACTS + INDEXES, AMERICAN CHEMICAL SOCIETY. COLUMBUS, US, vol. 81, no. 175235, 30 décembre 1974 (1974-12-30), page 369, XP000122335 Columbus, OH, USA ISSN: 0009-2258

## Description

### DOMAINE TECHNIQUE

L'invention concerne un enduit en poudre.

Plus particulièrement, l'invention a trait à un enduit en poudre à indication de séchage.

Le domaine technique de l'invention peut être défini comme celui des enduits en poudre.

Les enduits en poudre sont des produits, destinés, après gâchage avec de l'eau, à être appliqués sur divers supports dans le but de préparer ces supports préalablement à des travaux de finition.

Ces travaux de finition peuvent être par exemple l'application d'une peinture, un enduisage fin ou tout autre opération dite de finition susceptible d'intervenir sur le support.

On distingue généralement d'une part les enduits de lissage et d'autre part les enduits de rebouchage.

Les enduits en poudre peuvent être des produits à base de ciment, de plâtre, avec ou sans liant hydraulique.

Ils peuvent également être à base de liant non hydraulique seul.

Les critères et paramètres régissant l'utilisation des enduits en poudre sont principalement les conditions de préparation tels que le taux de gâchage, le temps de mélange, l'outil mis en oeuvre ; la durée d'utilisation avant la prise de l'enduit (notamment pour les produits à base de liants hydrauliques), la durée avant détérioration des propriétés d'application ; le temps de séchage ; l'aspect final et les propriétés du produit une fois sec notamment en ce qui concerne les opérations et traitements extérieurs susceptibles d'être réalisés sur le produit tels que ponçage, ou recouvrement par une autre couche.

De manière générale, le temps de séchage des enduits est la principale source de difficultés dans le cadre d'un processus comprenant l'application de ces enduits sur des supports afin de préparer ces supports avant des travaux de finition.

Le temps de séchage d'un enduit doit être impérativement respecté afin de permettre la poursuite des travaux dans les conditions prescrites et garanties par le fabricant.

Or, le temps de séchage dépend de nombreux paramètres différents, qui sont principalement :
- le taux de gâchage employé,
- la température ambiante,
- l'humidité relative,
- la nature des supports en particulier en ce qui concerne leur porosité et leur teneur en humidité,
- la durée et les conditions du stockage de l'enduit avant son utilisation.

Ces paramètres ne peuvent être maîtrisés par l'utilisateur final, en particulier dans le cas où celui-ci n'est pas un professionnel.

Il est donc difficile pour l'utilisateur de déterminer avec précision le temps de séchage d'un enduit. Dans les produits disponibles dans le commerce, le temps de séchage peut être indiqué par une fourchette de temps généralement large, ou bien le temps de séchage peut être indiqué de manière relativement précise mais pour des conditions théoriques, fixes, définies, rarement rencontrées par l'utilisateur. Enfin, dans certains cas, les temps de séchage né sont tout simplement pas précisés et il est mentionné que les travaux de finition ne pourront être entrepris « qu'après séchage complet ».

Le non respect du temps de séchage entraîne de nombreux inconvénients pour l'utilisateur qui sont notamment d'ordre technique et esthétique.

Les inconvénients d'ordre technique sont en particulier un défaut de résistance mécanique, de résistance à l'eau, des décollements, un phénomène de détrempe ; et les inconvénients d'ordre esthétique sont en particulier l'apparition de tâches, la déformation du produit, l'apparition de cloques.

Le document EP-A-0 884 291 décrit un enduit en poudre sèche à base d'un liant hydraulique qui comprend :
- 0,1 à 6% en poids de ciment Portland avec une teneur en Fe₂O₃ de moins de 5% en poids ;
- 0,1 à 3% de chaux ;
- 5 à 45% d'un ciment alumineux avec une teneur en Fe₂O₃ de moins de 5% en poids ;
- 2 à 18% de sulfate de calcium, par exemple sous la forme d'anhydrite, d'hémihydrate ou de dihydrate ;
- 0,1 à 2% d'additifs ;
- 0,1 à 8% de liants organiques ;
- 35 à 85% de charges par exemple quartz, carbonate, sable, etc.

Cet enduit peut comprendre, en outre, un colorant ou pigment, mais il ne s'agit pas d'un colorant qui change de couleur lors du séchage tel qu'un indicateur coloré sensible au pH.

Le document WO-A-00/66508 a trait à un enduit de rebouchage en pâte qui comprend un liant, un pigment, et un indicateur coloré. Cet enduit est d'une certaine couleur lorsqu'il contient de l'eau lors du stockage. Afin d'obtenir une stabilité de la couleur lors du stockage et d'éviter la disparition de cette couleur, un polymère spécifique est ajouté à l'enduit.

L'enduit de ce document n'est pas un enduit en poudre sèche sans eau mais un enduit en pâte prégâchée avec de l'eau.

Il existe donc un besoin non encore satisfait pour un enduit en poudre dont le temps de séchage après application puisse être déterminé avec précision et fiabilité par l'utilisateur.

Il existe encore un besoin pour un tel enduit dont le temps de séchage peut être déterminé avec précision par l'utilisateur quelles que soient les conditions d'utilisation, la nature du support, les paramètres environnementaux tels que la température ambiante et l'humidité relative, la durée et les conditions de stockage de l'enduit avant utilisation, le taux de gâchage, et tous les autres paramètres influençant le temps de séchage, dont la plupart ont été mentionnés plus haut.

Le but de la présente invention est de répondre aux besoins énumérés ci-dessus pour un enduit en poudre fournissant une indication précise, claire, fiable, sans ambiguïté du temps de séchage, à savoir de l'achèvement dudit séchage.

Ce but et d'autres encore sont atteints conformément à l'invention par un enduit en poudre comprenant un colorant choisi de façon que, à l'état de poudre sèche, l'enduit soit d'une première couleur, par exemple de couleur blanche, qu'il prenne une autre couleur au contact de l'eau utilisée lors d'un gâchage dudit enduit, et qu'il soit de nouveau de la première couleur après séchage de l'enduit.

De manière plus précise, l'enduit selon l'invention comprend en % en poids par rapport au poids total de l'enduit :
- A- Ciment Portland 3 à 10%, de préférence 5 à 8% ;
- B-
   - Ciment fortement alumineux (B1) : 0 à 40%, de préférence 0 à 35% ;
   - Source de sulfates réactifs
   dérivés de minéraux naturels (B2) : 2 à 50%, de préférence 12 à 25% ;
- C - une ou plusieurs charges
   et/ou pigments : 30 à 80%, de préférence 40 à 60%.

L'enduit selon l'invention peut également éventuellement comprendre en outre un constituant D qui est ainsi choisi parmi les ciments CSA (ciments à base de sulfoaluminate de calcium noté C₄ΣA₃ selon la notation cimentaire usuelle : voir plus loin) dans une quantité généralement de 0,05 à 5% en poids du poids total de l'enduit, de préférence de 0,2 à 3%, de préférence encore de 0,3 à 1%.

L'enduit selon l'invention peut également éventuellement comprendre en outre un constituant E choisi parmi les nanoparticules amorphes d'alumine Al₂O₃ dans une quantité généralement de 0,05 à 4% en poids du poids total de l'enduit, de préférence de 0,1 à 2%.

Le colorant représente généralement de 0,01 à 0,1%, de préférence de 0,02 à 0,05% en poids par exemple 0,05% en poids du poids total de l'enduit.

L'enduit selon l'invention peut également éventuellement comprendre en outre un constituant F choisi parmi les retardateurs de prise dans une quantité généralement de 0,3 à 2,0% en poids du poids total de l'enduit.

L'enduit selon l'invention peut également éventuellement comprendre en outre un constituant G choisi parmi les accélérateurs de prise dans une quantité généralement de 0,3 à 2,0% en poids.

L'enduit selon l'invention peut comprendre éventuellement en outre un constituant H choisi parmi les épaississants et/ou les additifs rhéologiques dans une quantité généralement de 0,5 à 1% en poids.

L'enduit selon l'invention peut comprendre éventuellement en outre un constituant I qui est choisi parmi les fibres dans une quantité généralement de 0,5 à 4,0% en poids.

L'enduit selon l'invention peut éventuellement comprendre éventuellement en outre un constituant J qui est choisi parmi les plastifiants et superplastifiants dans une quantité généralement de 0,05 à 1% en poids.

L'enduit selon l'invention peut comprendre éventuellement en outre un constituant K choisi parmi les additifs hydrophobes dans une quantité généralement de 0,3 à 1,5% en poids.

L'enduit selon l'invention peut comprendre éventuellement en outre un constituant L choisi parmi les liants polymériques sous forme de poudres redispersables dans une quantité généralement de 2,5 à 20% en poids.

Parmi les constituants cités ci-dessus, les constituants A et B (à savoir B1 ou bien B2 seul), et C ainsi que le colorant tel que décrit plus haut, sont indispensables et sont toujours présents dans l'invention.

Les constituants D et E sont nécessaires pour permettre une bonne maîtrise de la formulation, en particulier les temps de séchage, de durcissement, la résistance mécanique au jeune âge et la maniabilité de la pâte. Ils permettent d'agir sur la vitesse de décroissance du pH et sur le séchage de l'enduit.

Grâce à la composition spécifique de l'enduit selon l'invention notamment en ce qui concerne les constituants A, B, éventuellement D et E et à l'incorporation dans celui-ci d'un colorant tel que défini plus haut, une indication visuelle sûre, simple, et fiable de la fin du séchage est donnée à l'utilisateur.

La fin du séchage est indiquée de manière simple, sûre et fiable par la disparition de la seconde couleur qui était celle de l'enduit lors du gâchage, mélangé avec de l'eau, puis lors de l'application. La disparition de la seconde couleur coïncide avec le retour à la première couleur ou couleur initiale qui était celle de l'enduit, sec, en poudre avant le gâchage, mélange avec de l'eau. Cette première couleur est généralement la couleur blanche.

Le changement de couleur constitue une indication sans ambiguïté de la fin du mélange, même pour un utilisateur non professionnel.

Un enduit en poudre comprenant les constituants spécifiques énumérés ci-dessus en particulier A, B, C et éventuellement D et E dans les proportions spécifiques mentionnées et comprenant en outre un colorant spécifique défini plus haut, tel que l'enduit sec, l'enduit gâché et appliqué, puis l'enduit séché aient, chacun des couleurs particulières n'a jusqu'alors jamais été décrit.

L'enduit selon l'invention permet de répondre aux besoins indiqués ci-dessus, il surmonte les inconvénients, défauts et désavantages des enduits de l'art antérieur et il résout les problèmes posés par les enduits de l'art antérieur en matière d'indication du séchage.

L'enduit selon l'invention permet à l'utilisateur d'apprécier avec précision le degré de séchage de l'enduit indépendamment des conditions d'utilisation, par exemple en lissage ou en rebouchage ; du support ; des paramètres environnementaux tels que la température ambiante et l'humidité relative de l'air (H.R.) ; et du taux de gâchage.

En d'autres termes, à l'état de poudre, le produit est d'une première couleur, par exemple de couleur blanche, il se colore par exemple en rose violet ou bleu au contact de l'eau utilisée lors du gâchage et il retrouve sa première couleur, ou couleur initiale telle que la couleur blanche après le séchage complet.

L'enduit, une fois sec, ne se colore pas de nouveau, s'il est mis en contact avec de l'eau, une peinture, une colle ou tout autre produit à base d'eau ou de solvants, et ceci dans les conditions normales d'utilisation d'un enduit en tant que produit de second oeuvre.

L'enduit selon l'invention du fait des constituants spécifiques qu'il contient est un enduit dont le pH varie en fonction du degré de séchage. Cet enduit, qui contient généralement un faible dosage de ciment Portland, généralement, à savoir généralement de 3 de 10%, libère de la chaux libre au gâchage, d'où un pH élevé.

Au cours de la prise et du durcissement du produit, cette chaux est consommée par la prise en raison de l'ajout d'additifs spécifiques qui bloquent la chaux tout en fixant de l'eau par l'intermédiaire de la formation d'un minéral très fortement hydraté, l'ettringite ou trisulfoaluminate de calcium hydraté C₆Σ₃AH₃₂ et de ce fait le pH diminue.

On utilise dans la présente la notation cimentaire usuelle (C = CaO, S = SiO₂, Σ = SO₃, A = Al₂O₃, H = H₂O).

Du ciment fortement alumineux (B1) et une source de sulfates réactifs tels que du plâtre (B2) ; ou une source de sulfates de calcum réactifs tels que du plâtre (B2) seule sont également présents en tant que liant majoritaire pour stabiliser les formules, participer à la réaction de séchage du produit et pour permettre de doser une faible quantité de chaux libre libérée lors du gâchage.

Les autres composants tels que charges, pigments, résines, épaississants, dispersants, ... de la formule sont classiques et n'interviennent pas dans la propriété principale de l'enduit de l'invention, à savoir la variation du pH, du degré de séchage de l'enduit.

Ces autres composants peuvent être ajustés en fonction de l'utilisation souhaitée du produit final comportant une indication colorée du séchage.

La diminution du pH et la fixation de l'eau lors de la consommation de la chaux libre au cours du durcissement est donc exploitée d'une part pour permettre le séchage et d'autre part pour modifier la couleur de l'enduit, ou de préférence faire disparaître la couleur que l'enduit avait prise lors du gâchage (à pH élevé) pour qu'il retrouve sa première couleur ou couleur initiale, généralement la couleur blanche.

L'apparition de la couleur (seconde couleur) est donc liée à une brusque variation, augmentation du pH, et son changement ou sa disparition à une diminution de ce dernier.

Ces variations de couleur sont obtenues grâce à un colorant sensible au pH, ou indicateur coloré qui présente une première couleur à un fort pH par exemple de 9 à 14 due à l'apparition de la chaux lors du gâchage, et qui présente une autre couleur ou est de préférence incolore en pH moins alcalin par exemple de 6 à 9 qui correspond à la diminution très sensible de la concentration en chaux, donc au séchage du produit. C'est véritablement l'évolution des réactions chimiques de durcissement et le séchage du produit par évaporation et par fixation physique de l'eau qui influent sur la couleur de ce dernier.

En résumé, grâce à l'enduit spécifique selon l'invention, il s'établit une relation entre le degré de séchage de l'enduit et la valeur du pH, et l'on met en évidence cette variation du pH par le changement de couleur d'un indicateur coloré sensible au pH.

Le pH - du fait de la formulation spécifique de l'enduit selon l'invention - étant directement lié au degré de séchage de l'enduit, le changement de couleur de l'indicateur coloré et donc de l'enduit en fonction du pH donne également une indication précise sur le degré de séchage de l'enduit.

Le colorant sensible au pH doit de préférence être disponible en poudre fine, très facilement dispersable et soluble dans l'eau froide. A l'état de poudre, le produit doit être de préférence sans couleur pour permettre la réalisation d'enduits de teinte très blanche. De tels colorants existent dans la famille des indicateurs colorés couramment utilisés en chimie. Les indicateurs colorés qui conviennent dans l'enduit selon l'invention doivent de préférence avoir une zone de virage de teinte compatible avec le fonctionnement chimique de la formulation décrite, c'est-à-dire :
- L'indicateur coloré doit être activé avec une apparition de teinte franche, homogène et rapide par la libération de la chaux à un pH supérieur généralement à 12 ou 13 au moment du gâchage.
- L'indicateur coloré doit être désactivé avec de préférence une diminution de l'intensité de la teinte puis disparition de celle-ci lorsque cette chaux est consommée avec l'eau de gâchage, c'est-à-dire lorsque le produit est sec et suffisamment résistant pour permettre de poursuivre les travaux, c'est-à-dire à un pH généralement inférieur à 9,5, par exemple de 9 à 6.

La phénolphtaléine, de couleur rose-violet, est un exemple d'indicateur coloré qui permet d'obtenir une teinte homogène. Cette phénolphtaléine a une zone de virage de teinte située entre pH = 10 et pH = 8,5 environ.

La thymolphtaléine, de couleur bleue, peut également être utilisée dans certaines formulations.

La quantité d'indicateur coloré est telle qu'elle assure l'apparition d'une teinte d'intensité suffisante, elle est généralement comme indiqué plus haut de 0,01% à 0,1% en poids, de préférence de 0,02 à 0,05% du poids total de l'enduit par exemple de 0,05% en poids notamment dans le cas de la phénolphtaléine.

D'autres effets et avantages de l'invention apparaîtront mieux à la lecture de la description détaillée qui va suivre.

L'enduit selon l'invention est un enduit à poudre ce qui signifie que la plupart ou la totalité des constituants de cet enduit sont sous une forme pulvérulente. La granulométrie de cette poudre est généralement inférieure à 300 µm.

En outre, cette poudre, avant gâchage, est une poudre sèche, c'est-à-dire qu'elle comprend généralement moins de 3% en poids d'eau libre.

L'enduit selon l'invention comprend des constituants que l'on peut qualifier de principes réactifs de l'enduit : il s'agit des constituants A, B, D et E.

Le constituant A de l'enduit selon l'invention est un ciment Portland blanc ou gris ; il représente généralement de 3 à 10% en poids, de préférence de 5 à 8% en poids du poids total de l'enduit. Un tel ciment est par exemple le ciment vendu sous la dénomination commerciale Ciment portland Blanc 52,5 R par la société Lafarge.

L'enduit selon l'invention peut être un enduit à base de ciment ou bien un enduit à base de plâtre.

Si l'enduit est « à base de ciment », il comprend en tant que constituant B un constituant B1 qui est un ciment fortement alumineux blanc ou gris présent dans une quantité de 20 jusqu'à 40% en poids du poids total de l'enduit, et un constituant secondaire B2 présent en plus faible quantité à savoir généralement de 2 à 15% du poids total de l'enduit.

Ce constituant B2 est alors dans cas une source de sulfates réactifs dérivés de minéraux naturels tel que le plâtre alpha (CΣH_{1/2}, hémihydrate de sulfate de calcium obtenu par passage à l'autoclave), le plâtre Bêta (CΣH_{1/2}, hémihydrate de sulfate de calcium obtenu par cuisson ouverte) ou l'anhydrite (CΣ sulfate de calcium anhydre), ce dernier n'étant utilisé que dans le cas des enduits a base ciment et non pas comme liant majoritaire.

Un tel ciment B1 est par exemple le ciment vendu sous la dénomination commerciale TERNAL WHITE par la société Lafarge Aluminates.

Si l'enduit est à « base de plâtre », il comprend un constituant B2 seul tel que déjà défini plus haut (le constituant B1 est alors totalement omis) qui est une source de sulfates de calcium réactifs dérivés de minéraux naturels tel que le plâtre alpha qui est un sulfate de calcium hydraté obtenu en autoclave. Dans ce cas, le constituant B2 est présent en une quantité de 25 à 50% en poids du poids total de l'enduit.

L'enduit selon l'invention peut comprendre ensuite des constituants que l'on peut qualifier d'additifs spécifiques agissant sur le nombre, la taille et la croissance des germes d'ettringite : il s'agit des constituants D, G, F et G.

Le constituant D est un ciment dit de type CSA : il peut s'agir soit d'un ciment dit de type K autoréactif formulé avec du C₄ΣA₃ anhydre, de la chaux C, et des sulfates comme le gypse CΣH₂ ; soit du ciment CSA pur constitué de C₄ΣA₃ anhydre pur réagissant avec les autres composants de la formule, en particulier les composants B2 et A. La quantité de constituant D est généralement de 0,05 à 5% en poids du poids total de l'enduit, de préférence de 0,2 à 2% en poids, de préférence encore de 0,3 à 1% du poids total de l'enduit. Un tel ciment est par exemple le ciment disponible auprès de la société DENKA sous la dénomination DENKA CSA.

Le constituant E est constitué par des nanoparticules amorphes d'alumine Al₂O₃ : il s'agit d'un composant réactif de très haute surface spécifique qui réagit avec la chaux libre et certains composés hydrauliques libérés par le ciment Portland pour former de l'ettringite.

Lesdites nanoparticules ont généralement une taille de 1 à 60 nm et une surface spécifique de 100 à 200 m²/g.

De telles nanoparticules d'alumine sont par exemple disponibles auprès de la société Rhodia sous la dénomination Rhoximat SA 502.

Le constituant F est un retardateur de prise. Ce retardateur de prise peut être choisi facilement par l'homme du métier dans le domaine de la technique en fonction du type de liant hydraulique et de l'effet recherché.

Il peut être choisi par exemple parmi le gluconate de sodium, l'acide citrique et ses sels tels que le citrate de sodium, l'acide tartrique et ses sels, les colles animales, les phosphates de soude. La quantité de constituant F est généralement de 0,30% à 2% en poids du poids total de l'enduit.

Le constituant G est un accélérateur de prise, cet accélérateur de prise peut être choisi facilement par l'homme du métier dans le domaine de la technique.

Il peut être choisi par exemple parmi le carbonate de lithium, les carbonates, aluminates et silicates de sodium, les chlorures de calcium, d'aluminum et de sodium et le gypse. Ce dernier accélérateur est présent dans les formules sans ciment alumineux (constituant B1). La quantité de constituant G est généralement de 0,3 à 2% en poids du poids total de l'enduit.

Les autres constituants de l'enduit ne sont pas essentiels pour ce qui concerne l'obtention des effets fondamentaux de l'invention. Ils participent à la maniabilité, au temps d'utilisation, aux propriétés de mélange et d'application et à l'obtention des résistances mécaniques recherchées.

Ces constituants sont notamment des additifs non réactifs : il s'agit des constituants H, I, J, K et L ; et des charges et/ou pigments : il s'agit des constituants M, N, O, P, Q et R.

Le constituant H est choisi parmi les épaississants et les additifs rhéologiques tels que les éthers cellulosiques, les dérivés d'amidon, ou de gomme de guar. La quantité de constituant H est généralement de 0,5 à 1% en poids total de l'enduit.

Le constituant I est constitué par des fibres. Ces fibres peuvent être choisies parmi les fibres naturelles, synthétiques ou artificielles telles que les fibres de cellulose, les fibres de polymères comme les fibres de polyacrylonitrile ou de polyamide. La quantité de constituant I est généralement de 0,5 à 4% en poids du poids total de l'enduit.

Le constituant J est un plastifiant ou un superplastifiant choisi par exemple parmi la caséine, les polyacrylates, les polycarboxylates, les polymélamine sulfonates, les polynaphtalène sulfonates.

La quantité de plastifiant ou de superplastifiant est généralement de 0,05 à 1% en poids par rapport au poids total de l'enduit.

Le constituant K est un additif hydrophobe tel que l'oléate de sodium, le stéarate de zinc ou de calcium/magnésium, ou bien un silane tel que le silane en poudre disponible sous la dénomination SEAL 80 auprès de la société ELOTEX^{®}.

La quantité de constituant K est généralement de 0,3 à 1,5% du poids total de l'enduit.

Le constituant L est une résine sous forme de poudre redispersable dans l'eau. La quantité de constituant L est généralement de 2,5 à 20% du poids total de l'enduit.

Le constituant M est du carbonate de calcium simple ( de type poudre de marbre broyé) ou de la dolomie (carbonate double de de calcium et de magnésium broyé). La quantité de constituant M est généralement de 35 à 60% en poids du poids total de l'enduit.

Le constituant N est de la silice généralement issue de sables naturels dont la granulométrie maximale est généralement inférieure à 300 µm. La quantité de constituant N est généralement de 0,05 à 30% en poids du poids total de l'enduit.

Le constituant O est constitué par des charges allégées de nature organique telles que des billes de polymères creuses ou expansées, ou de nature minérale telles que du verre expansé, des billes de verre creuses, du mica expansé, des charges de faible densité.

La quantité de constituant O est généralement de 0,05 à 5% en poids du poids total de l'enduit, de préférence de 3 à 5%.

Le constituant Q est du talc, généralement à raison de 0,05 à 6% en poids, de préférence de 3 à 5%.

Le constituant R est du mica broyé non traité, généralement à raison de 0,05 à 6% en poids, de préférence de 3 à 5%.

Il est bien évident que l'homme du métier choisira les proportions des divers constituants qu'il souhaite inclure dans l'enduit dans les plages énumérées ci-dessus de façon à atteindre la quantité de 100% en poids pour la totalité de l'enduit.

En outre, les pourcentages des différents composants constituants vont varier notamment en fonction des conditions d'utilisation du produit lors de sa mise en oeuvre ou une fois sec, des contraintes de coût ou de vitesse de séchage souhaités, des propriétés mécaniques, de la dureté finale attendue. L'homme du métier peut facilement adapter la composition de l'enduit pour obtenir les propriétés voulues.

En règle générale, pour les produits destinés à acquérir de fortes résistances mécaniques au jeune âge, une bonne compensation du retrait et un séchage très rapide en forte épaisseur, les formulations à base de ciment fortement alumineux sont à retenir.

Pour les autres cas, les formules à base de plâtre alpha peuvent convenir. Les durées de séchage et surtout les durées de durcissement seront plus longues et les résistances mécaniques moindres au jeune âge et à long terme.

La mise en oeuvre de l'enduit en poudre décrit ci-dessus se fait de manière classique et est connue dans ce domaine de la technique.

Elle consiste à mélanger, à gâcher, l'enduit en poudre ayant la composition décrite ci-dessus avec de l'eau par exemple dans une proportion de 15 à 50% en poids, de préférence dans une proportion de 20 à 40% en poids de la poudre sèche.

L'enduit gâché est ensuite appliqué par des moyens connus sur le substrat, support à traiter. Les moyens d'application de l'enduit sont choisis en fonction de l'utilisation en rebouchage ou en lissage. L'enduit gâché appliqué sur le support va durcir et sécher sur celui-ci et subir la variation de couleur décrite plus haut.

L'invention va maintenant être décrite en référence aux exemples suivants donnés à titre illustratif et non limitatif.

### Exemple 1

On prépare un enduit en poudre contenant du ciment fortement alumineux ayant la formulation suivante donnée dans le Tableau 1 :

Cet enduit en poudre est de couleur blanche à l'état sec et rose-violet à l'état humide. Il contient de la phénolphtaléine en tant qu'indicateur coloré à raison de 0,05% en poids du poids total de l'enduit.

**Tableau 1**

| | |
|---|---|
| Résine poudre redispersable | 5,5% |
| Caséine poudre | 0,7% |
| Carbonate de lithium | 0,2% |
| Gluconate de soude | 0,07% |
| Ether cellulosique moyenne viscosité | 0,45% |
| Amidon modifié basse viscosité | 0,1% |
| Fibres polyamide 0,8 mm | 0,6% |
| Plâtre alpha | 9% |
| Ciment Portland blanc 52,5 | 6,5% |
| Ciment alumineux blanc | 38% |
| Ciment CSA | 0,3% |
| Nano alumine réactive | 0,5% |
| Poudre de marbre 15 µm | 31,1% |
| Charge allégée 250 µm | 7% |
| TOTAL | 100% |

### Formulation de l'exemple 1

On procède au gâchage de l'enduit sec en ajoutant de l'eau du réservoir à l'enduit en poudre. La quantité d'eau ajoutée est de 40% en masse par rapport à la quantité d'enduit en poudre.

Le temps de début du gâchage est pris comme étant le temps t=0. On applique l'enduit gâché sur support sec et on mesure le pH de l'enduit à différents temps à la température de 23 ± 2°C, et à un taux d'humidité relative de 50 ± 5%.

Lors du gâchage au temps t=0, l'enduit en poudre qui était initialement blanc devient d'une couleur rose-violet. Cette couleur atteint rapidement son intensité maximale car le pH est alors voisin de 10 (voir Tableau 2).

**Tableau 2**

| t | pH |
|---|---|
| 30 s | 11,8 |
| 5 min | 11,8 |
| 10 min | 11,2 |
| 15 min | 11,0 |
| 20 min | 11,0 |
| 25 min | 10,8 |
| 45 min | 10 |

Après 45 minutes, on observe un début de prise et le pH est alors voisin de 10 (voir Tableau 2). A partir de ce pH, on constate que la couleur de l'enduit perd de son intensité et devient progressivement plus pâle.

Et 24 heures après le gâchage, le pH est de 8,5 à 9,0.

Après cette prise, les vitesses de séchage et de durcissement vont dépendre des conditions environnementales telles que la température et l'humidité relative et des conditions d'utilisation : selon que l'on effectue un lissage en faible épaisseur ou bien un rebouchage.

Lorsque la disparition de la couleur rose-violet est homogène, c'est-à-dire qu'elle s'est produit sur l'ensemble de la surface revêtu par l'enduit, le pH mesuré est de l'ordre de 8,5. L'enduit appliqué est donc alors blanc sur l'ensemble de la surface revêtue. On donne ci-après les durées (temps de séchage tₛ) pour lesquelles on observe une disparition homogène de la teinte initiale de l'enduit gâché dans diverses conditions environnementales de température et d'humidité relative (H.R.) et diverses conditions de mise en oeuvre, à savoir en lissage ou en rebouchage, et sur un support sec de type plaque de béton normalisée.
- Si T = 23°C et H.R. = 50% support sec ;
   - pour un lissage en faible épaisseur (3 mm) tₛ = 2h00 à 2h30 ;
   - pour une utilisation en rebouchage, avec une épaisseur de 40 mm, et d'un diamètre de 100 mm ; tₛ = environ 5h00 ;
- Si T = 20°C, et H.R. = 80%, support sec
   - pour un lissage en faible épaisseur (3 mm), tₛ = 3h00 à 3h30 ;
   - pour une utilisation en rebouchage, avec une épaisseur de 40 mm et un diamètre de 10 mm, tₛ = 6h00 ;
- Si T = 10°C, H.R. = 40%, support sec
   - pour un lissage en faible épaisseur (3 mm), tₛ = 4h00 à 5h00 ;
   - pour une utilisation en rebouchage, avec une épaisseur de 40 mm et un diamètre de 100 mm, tₛ = 6h30 à 8h00.

Dans les cas où les supports sont humides et/ou le taux de gâchage est plus élevé par exemple de 42 à 45%, et/ou la température est basse par exemple de 5°C à 15°C, et/ou l'humidité relative est forte, alors les temps de séchage sont plus élevés et peuvent atteindre par exemple 10 à 12 heures pour une épaisseur de 40 mm.

Au contraire, si la température est supérieure à 25°C et/ou l'humidité relative est basse par exemple de 30% à 40% alors les temps de séchage sont sensiblement diminués par exemple de 5h00 à 4h00.

Dans tous les cas, quelles que soient les variations des divers paramètres environnementaux et les conditions de mise en oeuvre, on obtient selon l'invention une indication, sûre, fiable, de la fin du séchage, matérialisée par la disparition totale, homogène de la couleur prise par l'enduit lors du gâchage, et le retour à la couleur initiale (généralement blanche) de l'enduit sec.

De même, dans tous les cas, l'application d'eau superficielle, de peinture ou d'un revêtement de finition n'induit pas de nouveau changement de teinte de l'enduit. Toutefois, il est préférable d'incorporer un produit hydrophobe dans l'enduit.

### Exemple 2 : Formulation base plâtre, sans ciment alumineux.

Avec ce type de formulation donnée dans le Tableau 3, on obtient des décroissances de pH comparables au cas précédent, les temps de séchage et de disparition de la couleur résiduelle étant plus longs de 20 à 50% en fonction des conditions environnementales et du support.

La formulation du Tableau 3 contient de la phénolphtaléine en tant qu'indicateur coloré à raison de 0,05% en poids du poids total de l'enduit.

**Tableau 3 : Formulation de l'exemple 2**

| | |
|---|---|
| Résine poudre redispersable | 6 % |
| gypse | 0,4% |
| Citrate de sodium | 0,35% |
| Ether cellulosique moyenne viscosité | 0,45% |
| Amidon modifié basse viscosité | 0,4% |
| Fibres polyamide 0,8 mm | 0,6% |
| Plâtre alpha | 45% |
| Ciment Portland blanc 52,5 | 6,0% |
| Superplastifiant polynaphtalène sulfoné | 0,3% |
| Ciment CSA | 0,5% |
| Nano alumine réactive | 0,5% |
| Poudre de marbre 15 µm | 34,5% |
| Charge allégée 250 µm | 5% |
| TOTAL | 100% |

## Revendications

1. Enduit en poudre comprenant un colorant choisi de façon que, à l'état de poudre sèche, l'enduit soit d'une première couleur, qu'il prenne une autre couleur au contact de l'eau utilisée lors d'un gâchage, dudit enduit et qu'il soit de nouveau de la première couleur après séchage de l'enduit.

2. Enduit selon la revendication 1, comprenant en % en poids par rapport au poids total de l'enduit :
- A Ciment Portland : 3 à 10%, de préférence de 5 à 8% ;
- B
• Ciment fortement alumineux (B1) : 0 à 40%, de préférence 0 à 35% ;
• Source de sulfates réactifs dérivés de minéraux naturels (B2) : 2 à 50%, de préférence 12 à 25% ; ;.
- C une ou plusieurs charges et/ou pigments : 30 à 80%, de préférence 40 à 60%.

3. Enduit selon la revendication 2, qui comprend en tant que constituant B le constituant (B1) à raison de 20 à 40% en poids et le constituant (B2) à raison de 2 à 15% en poids.

4. Enduit selon la revendication 2, qui comprend en tant que constituant B seulement le constituant B2 à raison de 25 à 50% en poids.

5. Enduit selon la revendication 2, dans lequel le constituant B2 est choisi parmi le plâtre alpha, le plâtre bêta, et l'anhydrite.

6. Enduit selon l'une quelconque des revendications 1 à 5, dans lequel le colorant représente de 0,01 à 0,1%, de préférence de 0,02 à 0,05% en poids du poids total de l'enduit.

7. Enduit selon l'une quelconque des revendications 2 à 6, comprenant en outre un constituant D choisi parmi les ciments CSA dans une quantité de 0,05 à 5% en poids, de préférence de 0,3 à 2% en poids du poids total de l'enduit.

8. Enduit selon l'une quelconque des revendications 2 à 7, comprenant en outre un constituant E choisi parmi les nanoparticules amorphes d'alumine dans une quantité de 0,05 à 4% du poids total de l'enduit, de préférence de 0,1 à 2%.

9. Enduit selon l'une quelconque des revendications 2 à 8 comprenant en outre un constituant F qui est choisi parmi les retardateurs de prise dans une quantité de 0,3 à 2% en poids.

10. Enduit selon l'une quelconque des revendications 2 à 9, qui comprend en outre un constituant G qui est choisi parmi les accélérateurs de prise dans une quantité de 0,3 à 2,0% en poids.

11. Enduit selon l'une quelconque des revendications 2 à 7, qui comprend en outre un constituant H qui est choisi parmi les épaississants et/ou additifs rhéologiques dans une quantité de 0,5 à 1% en poids.

12. Enduit selon l'une quelconque des revendications 2 à 11, qui comprend en outre un constituant I qui est choisi parmi les fibres dans une quantité de 0,5% à 4,0% en poids.

13. Enduit selon l'une quelconque des revendications 2 à 12, qui comprend en outre un constituant J qui est choisi parmi les plastifiants et superplastifiants dans une quantité allant de 0,05 à 1% en poids.

14. Enduit selon l'une quelconque des revendications 2 à 13, qui comprend en outre un constituant K choisi parmi les additifs hydrophobes en une quantité de 0,3 à 1,5% en poids.

15. Enduit selon l'une quelconque des revendications 2 à 14, qui comprend en outre un constituant L choisi parmi les liants polymériques sous forme de poudres redispersables dans une quantité de 2,5 à 20% en poids.

16. Enduit selon l'une quelconque des revendications 2 à 15, dans lequel lesdits charges et/ou pigments sont choisis parmi le carbonate de calcium, la dolomie, la silice, les charges allégées de nature organique ou minérale, le talc, et le mica.

17. Enduit selon l'une quelconque des revendications précédentes, dans lequel ledit colorant est un colorant sensible au pH.

18. Enduit selon la revendication 17, dans lequel ledit colorant présente une première couleur à un pH élevé par exemple de 9 à 14 et une seconde couleur à un pH inférieur moins alcalin par exemple de 6 à 9.

19. Enduit selon la revendication 17 ou 18, dans lequel ledit indicateur coloré est la phénolphtaléine.

20. Enduit selon la revendication 17 ou 18, dans lequel ledit indicateur coloré est la thymolphtaléine.

## Claims

1. Powdered plaster comprising a dye selected such that, in the dry powder state, the plaster is of a first colour, it takes on another colour upon contact with water used during mixing of said plaster, and it returns to the first colour after the plaster has dried.

2. Plaster according to claim 1, comprising as a % by weight with respect to the total weight of the plaster:
- A Portland cement: 3 to 10%, preferably 5 to 8%;
- B
• Highly aluminous cement (B1) : 0 to 40%, preferably 0 to 35%;
• Source of reactive sulphates derived from natural minerals (B2): 2 to 50%, preferably 12 to 25%;
- C one or a plurality of fillers and/or pigments: 30 to 80%, preferably 40 to 60%.

3. Plaster according to claim 2, comprising, as constituent B, constituent (B1) in an amount of 20 to 40% by weight and constituent (B2) in an amount of 2 to 15% by weight.

4. Plaster according to claim 2, comprising, as constituent B, only constituent B2 in an amount of 25 to 50% by weight.

5. Plaster according to claim 2, wherein constituent B2 is selected from alpha plaster, beta plaster and anhydrite.

6. Plaster according to any of claims 1 to 5, wherein the dye represents 0.01 to 0.1%, preferably 0.02 to 0.05% by weight of the total weight of the plaster.

7. Plaster according to any of claims 2 to 6, further comprising a constituent D selected from CSA cements in a quantity of 0.05 to 5% by weight, preferably 0.3 to 2% by weight of the total weight of the plaster.

8. Plaster according to any of claims 2 to 7, further comprising a constituent E selected from amorphous alumina nanoparticles in a quantity of 0.05 to 4% of the total weight of the plaster, preferably 0.1 to 2%.

9. Plaster according to any of claims 2 to 8 further comprising a constituent F selected from retarding agents in a quantity of 0.3 to 2% by weight.

10. Plaster according to any of claims 2 to 9, further comprising a constituent G selected from setting accelerators in a quantity of 0.3 to 2.0% by weight.

11. Plaster according to any of claims 2 to 7, further comprising a constituent H selected from thickeners and/or rheological additives in a quantity of 0.5 to 1% by weight.

12. Plaster according to any of claims 2 to 11, further comprising a constituent I selected from fibres in a quantity of 0.5% to 4.0% by weight.

13. Plaster according to any of claims 2 to 12, further comprising a constituent J selected from plasticisers and super-plasticisers in a quantity ranging from 0.05 to 1% by weight.

14. Plaster according to any of claims 2 to 13, further comprising a constituent K selected from hydrophobic additives in a quantity of 0.3 to 1.5% by weight.

15. Plaster according to any of claims 2 to 14, further comprising a constituent L selected from polymeric binders in the form of redispersable powders in a quantity of 2.5 to 20% by weight.

16. Plaster according to any of claims 2 to 15, wherein said fillers and/or pigments are selected from calcium carbonate, dolomite, silica, light organic or mineral fillers, talc and mica.

17. Plaster according to any of the above claims, wherein said dye is a pH-sensitive dye.

18. Plaster according to claim 17, wherein said dye displays a first colour at a high pH for example from 9 to 14 and a second colour at a less alkaline lower pH for example from 6 to 9.

19. Plaster according to claim 17 or 18, wherein said coloured indicator is phenolphthalein.

20. Plaster according to claim 17 or 18, wherein said coloured indicator is thymolphthalein.

## Patentansprüche

1. Pulverspachtelmasse mit einem so ausgewählten Farbstoff, dass die Spachtelmasse im trockenen Zustand eine erste Farbe aufweist, im Kontakt mit dem beim Anmachen verwendeten Wasser eine andere Farbe annimmt und nach der Trocknung der Spachtelmasse wieder die erste Farbe aufweist.

2. Spachtelmasse nach Anspruch 1, in Gewichtsprozent in Bezug auf das Gesamtgewicht der Spachtelmasse umfassend:
- A Portlandzement: 3 bis 10%, vorzugsweise 5 bis 8%;
- B
• stark tonerdehaltiger Zement (B1): 0 bis 40%, vorzugsweise 0 bis 35%;
• eine Quelle reaktiver, von natürlichen Mineralien abstammender Sulfate (B2): 2 bis 50%, vorzugsweise 12 bis 25%.
- C eine oder mehrere Füllstoffen und/oder Pigmente: 30 bis 80%, vorzugsweise 40 bis 60%.

3. Spachtelmasse nach Anspruch 2, der als Bestandteil B den Bestandteil (B1) mit 20 bis 40 Gew.% und den Bestandteil (B2) mit 2 bis 15 Gew.% umfasst.

4. Spachtelmasse nach Anspruch 2, der als Bestandteil B nur den Bestandteil B2 mit 25 bis 50 Gew.% umfasst.

5. Spachtelmasse nach Anspruch 2, bei dem der Bestandteil B2 ausgewählt wird unter Alpha-Gips, Beta-Gips und Anhydrid.

6. Spachtelmasse nach einem der Ansprüche 1 bis 5, bei dem der Farbstoff 0,01 bis 0,1 Gew.%, vorzugsweise 0,02 bis 0,05 Gew.% des Gesamtgewichts der Spachtelmasse beträgt.

7. Spachtelmasse nach einem der Ansprüche 2 bis 6 mit außerdem einem Bestandteil D, ausgewählt unter den Zementen des Typs CSA bzw. C4EA3 in einer Menge von 0,05 bis 5 Gew.%, vorzugsweise von 0,3 bis 2 Gew.% des Gesamtgewichts der Spachtelmasse.

8. Spachtelmasse nach einem der Ansprüche 2 bis 7 mit außerdem einem Bestandteil E, ausgewählt unter den amorphen Aluminiumoxid-Nanoteilchen in einer Menge von 0,05 bis 4% , vorzugsweise 0,1 bis 2% des Gesamtgewichts der Spachtelmasse.

9. Spachtelmasse nach einem der Ansprüche 2 bis 8 mit außerdem einem Bestandteil F, ausgewählt unter den Abbindeverzögerern in einer Menge von 0,3 bis 2 Gew.%.

10. Spachtelmasse nach einem der Ansprüche 2 bis 9 mit außerdem einem Bestandteil G, ausgewählt unter den Abbindebeschleunigern in einer Menge von 0,3 bis 2,0 Gew.%.

11. Spachtelmasse nach einem der Ansprüche 2 bis 7 mit außerdem einem Bestandteil H, ausgewählt unter den Dickungsmitteln und/oder Fließmittel in einer Menge von 0,5 bis 1 Gew.%.

12. Spachtelmasse nach einem der Ansprüche 2 bis 11 mit außerdem einem Bestandteil I, ausgewählt unter den Fasern in einer Menge von 0,5 bis 4 Gew.%.

13. Spachtelmasse nach einem der Ansprüche 2 bis 12 mit außerdem einem Bestandteil J, ausgewählt unter den Weichmachern und Superweichmachern in einer Menge von 0,05 bis 1 Gew.%.

14. Spachtelmasse nach einem der Ansprüche 2 bis 13 mit außerdem einem Bestandteil K, ausgewählt unter den wasserabweisenden Additiven in einer Menge von 0,3 bis 1,5 Gew.%.

15. Spachtelmasse nach einem der Ansprüche 2 bis 14 mit außerdem einem Bestandteil L, ausgewählt unter den polymerischen Bindemitteln in Form von redispergierbaren Pulvern in einer Menge von 2,5 bis 20 Gew.%.

16. Spachtelmasse nach einem der Ansprüche 2 bis 15, bei dem die genannten Füllstoffen und/oder Pigmente ausgewählt werden unter dem Calciumcarbonat, dem Dolomit, dem Siliciumdioxid, den Leichtfüllstoffen organischer oder mineralischer Natur, dem Talk, und dem Glimmer.

17. Spachtelmasse nach einem der vorhergehenden Ansprüche, bei dem der genannte Farbstoff ein pH-sensibler Farbstoff ist.

18. Spachtelmasse nach Anspruch 17, bei dem der genannte Farbstoff eine erste Farbe mit einem hohen pH von zum Beispiel 9 bis 14 und eine zweite Farbe mit einem weniger alkalischen niedrigen pH von zum Beispiel 6 bis 9 aufweist.

19. Spachtelmasse nach Anspruch 17 oder 18, bei dem der genannte Indikator Phenolphtalein ist.

20. Spachtelmasse nach Anspruch 17 oder 18, bei dem der genannte Indikator Thymolphtalein ist.
